# FASCICULE DE BREVET EUROPEEN

(11) **EP 3 380 338 B1**
(45) Date de publication et mention de la délivrance du brevet: **29.01.2020**
(21) Numéro de dépôt: 16806216.4
(22) Date de dépôt: 21.10.2016
(51) Int. Cl.: B60B 7/00, B60B 7/02

(54) **ENJOLIVEUR PERFECTIONNE A EFFET TURBINE POUR ROUE DE VEHICULE**
VERBESSERTE RADKAPPE MIT TURBINENWIRKUNG FÜR EIN FAHRZEUGRAD
IMPROVED HUBCAP WITH TURBINE EFFECT FOR VEHICLE WHEEL

(30) Priorité: 23.11.2015 FR 1561230; 23.11.2015 FR 1561231; 23.11.2015 FR 1561232
(43) Date de publication de la demande: 03.10.2018
(73) Titulaire: PSA AUTOMOBILES S.A., 78300 Poissy (FR)
(72) Inventeur: PALPACUER, Eric, 75013 Paris (FR)
(86) Numéro de dépôt international: PCT/FR2016/052718
(87) Numéro de publication internationale: WO 2017/089664

(56) Documents cités:
- FR-A1- 2 408 470
- FR-A1- 3 011 769
- US-A- 2 761 530
- US-A- 3 013 639

## Description

L'invention porte sur un enjoliveur perfectionné à effet turbine pour roue de véhicule, en particulier pour roue de véhicule automobile. Elle concerne aussi une roue de véhicule, en particulier une roue de véhicule automobile, qui est équipée d'un tel enjoliveur perfectionné à effet turbine.

L'enjoliveur de roue, appelé aussi chapeau de roue, est une pièce en matière métallique ou en matière plastique, par exemple en polyamide, qui est placée sur l'extérieur de la partie centrale d'une roue d'un véhicule pour décorer : l'enjoliveur permet « d'habiller » les roues en tôle du véhicule conçues comme structurelles et dépourvues de style.

Les enjoliveurs dits « enjoliveurs standards » ne présentent pas de caractéristiques aérodynamiques optimales, mais essentiellement des caractéristiques de style. Ils présentent un ajourage relativement important et impactent l'aérodynamique du véhicule.

On connaît des enjoliveurs dits « aérodynamiques », qui permettent de réduire la traînée aérodynamique du véhicule. Ils présentent, contrairement aux enjoliveurs précédents, un ajourage minimal qui a une incidence négative sur le refroidissement des freins.

On connaît également des enjoliveurs dits « enjoliveurs à effet turbine », dits aussi « enjoliveurs turbines », qui comprennent un ajourage annulaire, des pales aérodynamiques dans l'ajourage, qui s'étendent radialement entre la partie centrale et le bord périphérique de l'enjoliveur et qui présentent une section à profil spécifique, aérodynamique, de type en « aile d'avion » par exemple.

Le bon fonctionnement de ces enjoliveurs à effet turbine est conditionné par une bonne diffusion et canalisation de l'air au travers des ajourages du voile des roues sur lesquelles ils sont fixés, ainsi que la recherche de formes et dimensions optimales pour ses parties constituantes.

Différentes solutions techniques ont déjà été proposées à cette fin.

A titre d'exemple, le document FR 3 011 769 décrit un enjoliveur aérodynamique perfectionné pour roue de véhicule automobile. La roue présente une jante cylindrique et un voile comportant des ajourages radiaux formés par des pales disposées radialement entre le moyeu central et le bord périphérique de la jante. L'enjoliveur présente également des ajourages radiaux, qui sont formés par des pales d'enjoliveur disposées radialement entre la partie centrale de l'enjoliveur et le bord périphérique de ce dernier, de telle sorte que les pales d'enjoliveur dévient le flux d'air latéral de manière indirecte et le canalise au travers des ajourages radiaux du voile de la roue. Les pales d'enjoliveur sont radialement comprises entre deux parois axiales sensiblement cylindriques formant deux déflecteurs pour concentrer le flux d'air dans les ajourages radiaux du voile de la roue. Cependant, les ajourages radiaux de l'enjoliveur ne présentent pas une surface optimale, limitant de fait le flux d'air apte à refroidir les freins du véhicule. En outre, ce type d'enjoliveur obtenu par moulage est onéreux à fabriquer.

A titre d'exemple également, le document FR 2 408 470 décrit un enjoliveur de roue pour une roue de véhicule à voile plein présentant des ouvertures d'aspiration d'air, dont le disque se termine dans la zone du bord de jante et limite, avec celui-ci, une fente annulaire dirigée radialement vers l'extérieur et servant d'ouverture de sortie d'air. Le disque présente aussi, sur la face arrière de sa partie formant couronne circulaire et dans sa zone située radialement vers l'extérieur, des pales de ventilation d'orientation à peu près radiales. De plus, le disque d'enjoliveur est doté, dans la zone située radialement vers l'intérieur des pales de ventilation formées d'une seule pièce avec lui et se terminant radialement vers l'extérieur à peu près sur sa périphérie, d'ouvertures d'aspiration d'air supplémentaires en forme de fente annulaire. Les bords d'attaque, qui limitent cette fente annulaire, sont situés dans le même plan radial, de telle sorte que le coefficient d'aération est amélioré.

Toujours à titre d'exemple, le document US 2014/0265534 A1 décrit une variante des deux enjoliveurs mentionnés ci-dessus, dans laquelle il est prévu un joint d'étanchéité pour éviter que l'eau ou des salissures ne pénètrent dans les corps creux autres que les ajourages de ventilation.

On connaît par exemple, selon le document EP 0 301 553 B1, une roue pour véhicule à moteur, qui comprend une jante, un disque de roue relié à la jante, des ouvertures de sortie d'air prévues dans le disque de roue, concentriques avec la jante, réparties sur la surface dans la zone proche de la jante et assurant un courant d'air dirigé depuis le côté intérieur de la roue vers le côté extérieur de la roue, des ouvertures d'entrée d'air disposées dans le disque de roue, concentriques avec la jante, réparties sur la surface, radialement plus proches de l'axe que les ouvertures de sortie d'air et assurant un courant d'air dirigé depuis le côté extérieur de la roue vers le côté intérieur de la roue, et une couronne d'ailettes associée respectivement aux ouvertures d'entrée d'air et aux ouvertures de sortie d'air. Au moins des parties des ailettes des deux couronnes d'ailettes présentent des positions inclinées par rapport à l'axe de roue et les positions inclinées des ailettes des deux couronnes d'ailettes sont dirigées en sens inverse. De plus, il est prévu un canal annulaire d'entrée d'air recevant la couronne d'ailettes associée aux ouvertures d'entrée d'air, et un canal annulaire de sortie d'air recevant la couronne d'ailettes associée aux ouvertures de sortie d'air.

Le but de la présente invention est de fournir un enjoliveur perfectionné à effet turbine pour roue de véhicule, en particulier pour roue de véhicule automobile, qui permette d'optimiser, à la fois, la traînée aérodynamique du véhicule et le refroidissement des freins.

Un autre but de la présente invention est de fournir un tel enjoliveur perfectionné, qui permette une optimisation de la diffusion et de la canalisation de l'air au travers des ajourages du voile de la roue.

Un autre but de la présente invention est de fournir un tel enjoliveur turbine perfectionné, qui apporte un gain en CO₂.

Un autre but de la présente invention est de fournir un tel enjoliveur turbine perfectionné, qui soit d'un prix de revient sensiblement équivalent à celui d'un enjoliveur standard.

C'est également un but de la présente invention de fournir un tel enjoliveur perfectionné, qui soit de structure simple, d'assemblage et de montage aisés, qui soit robuste, fiable, et qui soit d'un prix de revient sensiblement équivalent à celui d'un enjoliveur standard.

Pour parvenir à ces buts, la présente invention a pour objet un enjoliveur perfectionné à effet turbine pour roue de véhicule, en particulier pour roue de véhicule automobile, conforme à la revendication 1. D'autres caractéristiques sont définies dans les revendications dépendantes.

D'autres buts, avantages et caractéristiques de l'invention apparaîtront dans la description qui suit d'exemples de réalisation, non limitatifs de l'objet et de la portée de la présente demande de brevet, accompagnée de dessins dans lesquels :
- la figure 1 est une vue de face, schématique, d'un enjoliveur perfectionné à effet turbine selon la présente invention, monté sur une roue de véhicule automobile,
- la figure 2 est une vue en coupe, schématique, de l'enjoliveur perfectionné de la figure 1 monté sur une roue de véhicule, selon le plan de coupe AA de la figure 1,
- la figure 3 est une vue en coupe, schématique, de l'enjoliveur perfectionné des figures 1 et 2, monté sur une roue de véhicule, selon le plan de coupe BB de la figure 1,
- la figure 4 est une vue en coupe, agrandie, d'une partie périphérique de l'enjoliveur perfectionné monté sur la roue d'un véhicule, tel que représenté notamment sur la figure 2, laquelle vue en coupe est destinée à représenter une pale d'enjoliveur en regard d'un ajourage du voile de la roue et les déflecteurs de flux d'air selon la présente invention,
- la figure 5 est une vue de face, schématique, de la face interne de l'enjoliveur perfectionné des figures précédentes représentant les déflecteurs de flux d'air selon la présente invention,
- la figure 6 est une vue en coupe, agrandie d'une partie périphérique d'une variante de réalisation de l'enjoliveur perfectionné selon l'invention, dans laquelle un joint d'étanchéité est monté à l'extrémité de chacun des deux déflecteurs de flux d'air,
- la figure 7 est une vue en coupe, schématique, agrandie, de l'enjoliveur turbine perfectionné de la figure 1 monté sur une roue de véhicule, selon le plan de coupe AA de la figure 1,
- la figure 8 représente une vue de face d'un enjoliveur aérodynamique selon l'invention,
- la figure 9 représente une vue partielle en coupe transversale de l'enjoliveur et agrandie montrant principalement les pales et les ajourages radiaux de l'enjoliveur de la figure 8, et
- la figure 10 représente une vue en coupe selon la ligne VI-VI de la figure 8.

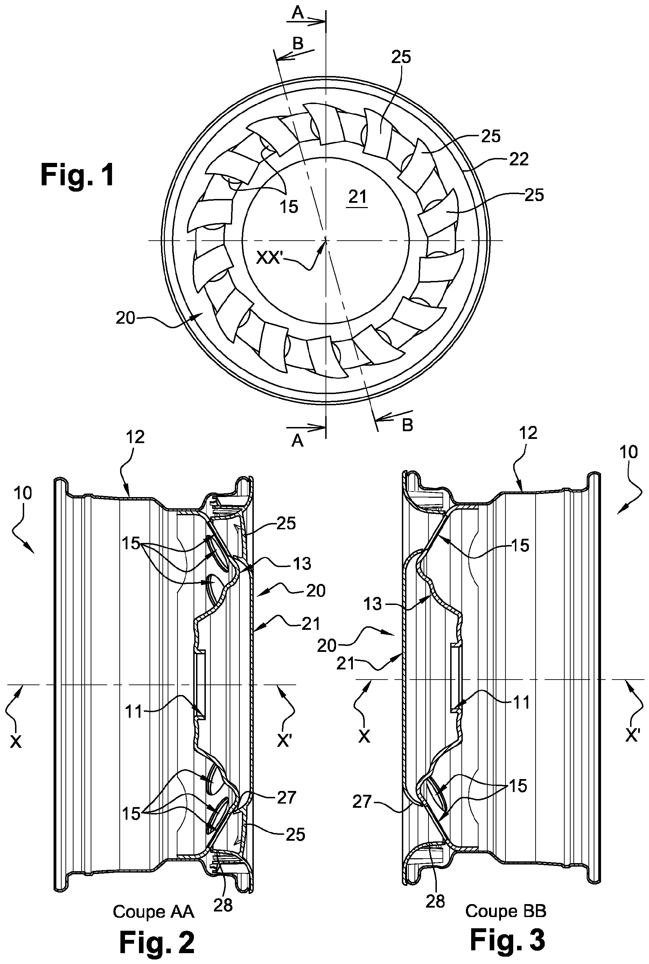

En référence aux dessins des figures 1, 2 et 3, on a représenté une roue de véhicule automobile, d'axe XX', de référence générale 10 (figures 2 et 3), qui est, de manière classique, constituée principalement de trois parties :
- le moyeu 11, disposé au centre de la roue, qui assure le guidage en rotation de cette dernière par rapport au châssis du véhicule,
- la jante, cylindrique, désignée par la référence 12, qui est située à la périphérie et sur laquelle se fixe la bande de roulement rapportée, et
- le voile, de référence générale 13, qui relie le moyeu 11 à la jante 12 et qui présente des ajourages radiaux, désignés collectivement par la référence 15.

Sur la roue 10, il est prévu un enjoliveur perfectionné à effet turbine, appelé aussi « enjoliveur turbine » dans le présent texte, désigné par la référence générale 20, réalisé par exemple par moulage par injection d'un matériau polymère, de type polyamide par exemple. La structure de cet enjoliveur, décrite en détails ci-après, permet une circulation d'air au travers de la roue de véhicule, de façon à améliorer le sillage latéral de la roue et obtenir, ainsi, un écoulement plus propre et moins tourbillonnaire sur les flancs du véhicule.

De façon classique, l'enjoliveur turbine 20, représenté de face sur la figure 1 et de profil sur les figures 2 et 3, présente une partie centrale, sensiblement plane, désignée par la référence 21, et un bord périphérique, désigné par la référence numérique 22. Cet enjoliveur turbine 20 est équipé de pales aérodynamiques, désignées collectivement 25, réparties circulairement selon un pas angulaire constant sur sa périphérie. Ce sont des pales à profil en « aile d'avion », type « CLARK Y » par exemple, qui est un profil de forme relativement simple, très efficace à petite échelle, et très largement utilisé dans la construction aéronautique et le modélisme. En variante, le profil en « aile d'avion » de la section des pales aérodynamiques 25 peut être un profil choisi parmi les types de profil « en aile d'avion » suivants, connus en soi : profil de type « JOUKOWSKI », profil de type « NACA » symétrique ou cambré.

A titre d'exemple non limitatif de l'objet et de la portée de la présente invention, l'enjoliveur turbine présente 14 pales aérodynamiques 25 identiques, réparties circulairement selon un pas angulaire constant sur la périphérie de l'enjoliveur 20.

Les pales aérodynamiques 25 permettent de créer un flux d'air dans les ajourages 15 du voile 13 de la roue 10, ce qui a pour résultat d'améliorer le sillage latéral du véhicule.

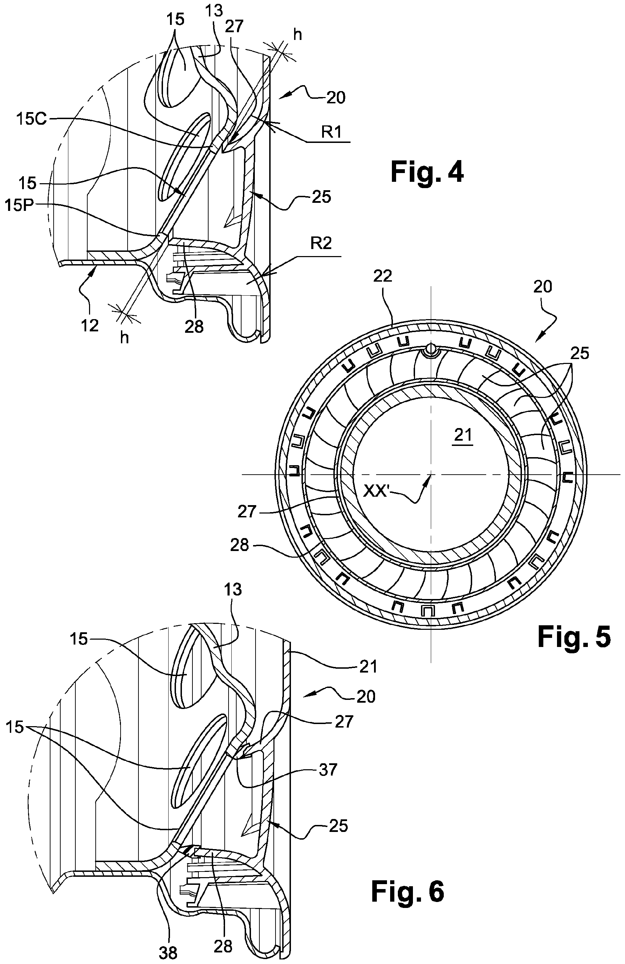

En référence aux dessins des figures 4 et 5, selon le principe de la présente invention, l'enjoliveur perfectionné à effet turbine 20 comprend deux déflecteurs, circulaires, en extension ou saillie de la surface interne de l'enjoliveur. Ces deux déflecteurs sont destinés à canaliser et rendre optimal le flux d'air indirect créé par les pales aérodynamiques 25, plus précisément par la surpression sur l'intrados des pales aérodynamiques 25, et dirigé vers les ajourages 15 du voile 13 de la roue. Un premier déflecteur, dit « déflecteur intérieur », désigné par la référence 27 est dirigé sur le bord 15C des ajourages 15 qui est le plus rapproché du centre XX' de la roue 10, tandis qu'un second déflecteur, dit « déflecteur extérieur », désigné par la référence 28, est dirigé vers le bord 15P des ajourages 15 qui est le plus rapproché de la jante 12 ou périphérie extérieure de la roue 10.

Egalement selon le principe de la présente invention, le positionnement des déflecteurs 27 et 28 par rapport au voile de la roue doit répondre à des règles précises.

Ainsi, à titre d'exemple, pour une roue de véhicule de 16 pouces (c'est-à-dire 406,40 millimètres), le jeu « h » entre l'extrémité des déflecteurs 27 et 28 et le voile 13 de la roue 10 doit être avantageusement compris entre 2 millimètres et 3 millimètres. La valeur minimale de 2 millimètres du jeu « h » est conditionnée par la prise en compte des tolérances des pièces en contact, à savoir le voile 13 de la roue et l'enjoliveur 20. La valeur maximale de 3 millimètres du jeu « h » est conditionnée par la limite au-delà de laquelle le flux d'air généré par les pales aérodynamiques 25 est perturbé.

Les déflecteurs 27 et 28 ont un profil sur toute la périphérie de l'enjoliveur 20 et le raccordement de ces profils avec la face interne de l'enjoliveur 20 présente une section de raccordement « rayonnée », c'est-à-dire un section en arc de cercle. Les rayons des deux sections circulaires de raccordement des déflecteurs 27 et 28 sont désignés par les références numériques R1 et R2, respectivement.

Il va de soi que les valeurs minimale et maximale mentionnés ci-dessus du jeu « h » sont différentes pour une roue de diamètre différent de 16 pouces.

Il va de soi également que la forme et la position des ajourages 15 du voile 13 de la roue conditionnent la position des déflecteurs 27 et 28.

En référence au dessin de la figure 6, on a représenté une variante de réalisation de l'enjoliveur décrit ci-dessus. Dans cette variante de réalisation, il est prévu à l'extrémité de chacun des deux déflecteurs 27 et 28, entre l'enjoliveur 20 et le voile 13 de la roue 10, un joint souple d'étanchéité, circulaire, qui permet de garantir une étanchéité entre l'enjoliveur 20 et le voile 13 et, en conséquence, un flux d'air optimal sur les ajourages 15 du voile 13 de la roue. Ainsi, il est prévu un joint souple d'étanchéité 37 à l'extrémité libre du déflecteur 27 et un joint souple d'étanchéité 38 à l'extrémité libre du déflecteur 28.

Ces deux joints d'étanchéité permettent de rendre optimale l'étanchéité entre l'enjoliveur 20 et le voile 13 de la roue 10, et par conséquent, de rendre optimal le flux d'air généré par les pales aérodynamiques 25 et dirigé vers les ajourages 15 du voile 13 de la roue.

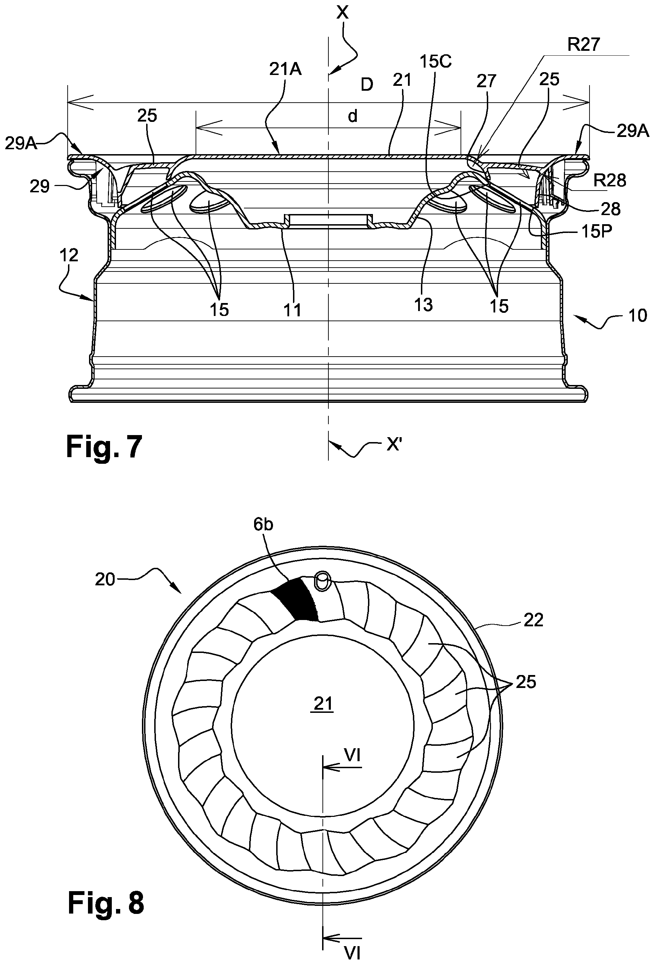

Le bon fonctionnement de l'enjoliveur turbine est conditionné par les caractéristiques de forme et dimensionnelles de ses parties constituantes, notamment celles relatives à sa partie centrale, aux pales aérodynamiques et aux déflecteurs, comme décrit en détail ci-après en référence, notamment, au dessin de la figure 7.

Ainsi, il importe de noter que la partie centrale 21 de l'enjoliveur joue un rôle prépondérant et doit, conformément à des résultats expérimentaux, être d'un diamètre le plus important possible, compatible avec la position des pales aérodynamiques 25 et des ajourages 15 du voile 13 de la roue. A cette fin, selon le principe de la présente invention, cette partie centrale 21 de l'enjoliveur 20, circulaire, pleine, doit être d'un diamètre « d » relativement important par rapport au diamètre « D » de l'enjoliveur 20, à savoir d'un diamètre « d » de l'ordre des deux tiers du diamètre « D » de l'enjoliveur 20.

De plus, toujours en référence au dessin de la figure 7, la surface extérieure 21A de cette partie centrale 21 de l'enjoliveur 20 doit être la plus plane possible et, de préférence, alignée sur la face extérieure 29A du crochet de jante 29.

En variante, il est possible d'admettre une forme convexe de cette surface extérieure 21A de la partie centrale 21, une surface concave étant, à contrario, tout à fait proscrite.

Il importe de noter également que chaque déflecteur, 27 et 28, est raccordé à la partie centrale 21 de l'enjoliveur 20 par une section de raccordement R27, respectivement R28, en arc de cercle de rayon compris entre 10 et 50 millimètres.

Conformément également au principe de la présente invention, le nombre des ajourages 15 du voile 13 de la roue 10 est avantageusement égal au nombre des espaces qui séparent les pales aérodynamiques 25 et, de plus, la surface totale projetée desdits espaces entre les pales aérodynamiques 25 est avantageusement sensiblement égale à la surface totale des ajourages 15 du voile 13 de la roue 10.

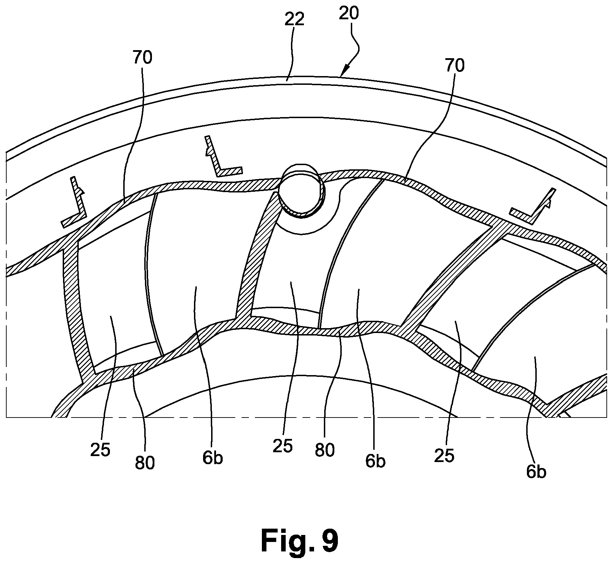

Comme le montrent les figures 8 et 9, de manière à optimiser le débit du flux d'air, les déflecteurs respectivement extérieur 28 et intérieur 27 de l'enjoliveur 20 selon l'invention présentent chacun en section transversale sensiblement une forme de cercle au contour ondulé, et non plus une forme simplement sensiblement circulaire comme dans l'art antérieur.

Ainsi, les ajourages radiaux 6b de l'enjoliveur 20, qui sont formés par les espacements entre des pales d'enjoliveur 25 profilées en « aile d'avion » et disposées radialement entre la partie centrale 21 de l'enjoliveur 20 et le bord périphérique 22 de ce dernier, présentent chacun des parois axiales constituées par des parties de parois 70, 80 des deux déflecteurs respectivement extérieur 28 et intérieur 27 délimitant entre elles chaque ajourage radial 6b, lesquelles parties de parois 70, 80 sont élargies radialement en direction d'une pale d'enjoliveur 25 adjacente. En particulier, comme cela est représenté à la figure 9, les parties de parois 70, 80 des deux déflecteurs respectivement extérieur 28 et intérieur 27 sont radialement convexes extérieurement en direction de la pale d'enjoliveur 25 adjacente. En outre, les parties de parois 70, 80 dirigées vers la pale d'enjoliveur 25 opposée rejoignent la forme sensiblement circulaire telle que décrite de l'art antérieur.

Il en résulte une augmentation de la surface de chaque ajourage radial 6b de l'enjoliveur 20 par rapport à la surface de chaque ajourage radial de l'enjoliveur de l'art antérieur. Ainsi le refroidissement des freins est optimisé.

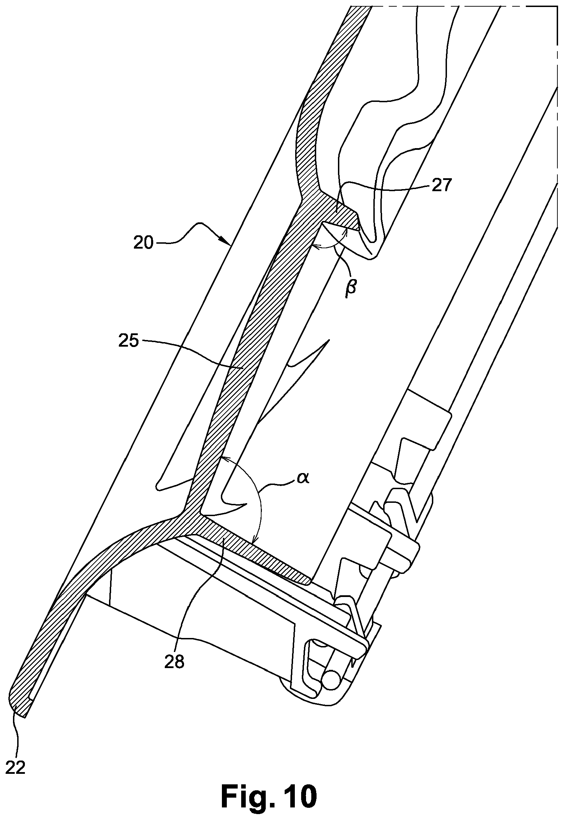

Enfin, comme représenté sur la figure 10, les déflecteurs respectivement extérieur 28 et intérieur 27 de l'enjoliveur 20 selon l'invention sont chacun de section longitudinale sensiblement rectiligne.

Ces sections longitudinales respectivement du déflecteur extérieur 28 et du déflecteur intérieur 27 sont orientées respectivement selon deux droites formant avec un plan orienté selon la direction longitudinale d'une pale d'enjoliveur 25 deux angles respectivement α et β, supérieurs ou égaux à 90°. Cette caractéristique de l'invention présente un avantage économique lors de la fabrication de l'enjoliveur 20. En effet, ce dernier est obtenu par moulage, et une telle orientation des déflecteurs respectivement extérieur 28 et intérieur 27, formant une légère dépouille, évite la formation lors du moulage de zones en contre-dépouille. Le démoulage des enjoliveurs 20 est alors facilité et ne nécessite pas l'utilisation de chariots-tiroirs.

Ainsi, l'enjoliveur 20 selon l'invention permet de réduire son coût de fabrication, tout en augmentant le débit de flux d'air traversant le voile 13 de la roue 10. Il en résulte un meilleur refroidissement des freins du véhicule.

L'enjoliveur perfectionné à effet turbine décrit ci-dessus dans des modes de réalisation particuliers présente de nombreux avantages, parmi lesquels les avantages suivants :
- il permet d'optimiser la traînée aérodynamique du véhicule,
- il permet un gain en CO2 estimé à 0,7 g/Km,
- il permet un refroidissement du frein optimisé par le flux d'air généré,
- il présente un fonctionnement optimal, parce que nombre de ses caractéristiques de forme ou dimensionnelles sont optimisées,
- il est économique, parce que son coût de revient est sensiblement identique à celui d'un enjoliveur standard, et
- il est efficace, l'optimisation de la diffusion et de la canalisation de l'air sur les ajourages du voie de la roue ayant pour résultat une optimisation du rendement de l'effet turbine.

## Revendications

1. Enjoliveur perfectionné à effet turbine pour roue de véhicule, en particulier pour roue de véhicule automobile, ladite roue (10) présentant une jante périphérique (12), cylindrique, un moyeu central (11) et un voile (13) à ajourages (15) reliant le moyeu central (11) à la jante périphérique (12) et ledit enjoliveur perfectionné (20) présentant une partie centrale (21) et des pales aérodynamiques (25), qui sont réparties à l'extérieur de ladite partie centrale (21) et qui sont situées en regard des ajourages (15) du voile (13) de la roue (10) pour créer un flux d'air permettant d'améliorer le sillage latéral du véhicule, ledit enjoliveur perfectionné (20) comportant deux déflecteurs (27, 28), circulaires, en extension de la surface interne de l'enjoliveur (20), destinés à orienter le flux d'air vers les ajourages (15) du voile (13) de la roue (10), à savoir un premier déflecteur, dit « déflecteur intérieur » (27), dirigé vers le bord (15C) des ajourages (15) le plus rapproché du centre (« XX' ») de la roue (10) et un second déflecteur, dit « déflecteur extérieur » (28), dirigé vers le bord (15P) des ajourages (15) le plus rapproché de la périphérie extérieure de la roue (10), ledit enjoliveur perfectionné (20) étant **caractérisé en ce qu'**il est prévu, à l'extrémité de chacun des deux déflecteurs (27, 28), entre l'enjoliveur (20) et le voile (13) de la roue (10), un joint souple d'étanchéité (37, 38), circulaire, qui permet de garantir une étanchéité entre l'enjoliveur (20) et le voile (13) de la roue et, en conséquence, un flux d'air optimal sur les ajourages (15) du voile (13) de la roue (10).

2. Enjoliveur perfectionné à effet turbine selon la revendication 1, **caractérisé en ce que** lesdits déflecteurs sont distants du voile de la roue d'un jeu (« h ») de valeur minimale relativement faible de l'ordre de 0,005 fois le diamètre de la roue, c'est-à-dire de l'ordre de 2 millimètres pour une roue de 16 pouces (406,40 mm).

3. Enjoliveur perfectionné à effet turbine selon l'une quelconque des revendications 1 et 2, **caractérisé en ce que** lesdits déflecteurs sont distants du voile de la roue d'un jeu (« h ») de valeur maximale de l'ordre de 0,0075 fois le diamètre de la roue, c'est-à-dire de l'ordre de 3 millimètres pour une roue de 16 pouces (406,40 mm).

4. Enjoliveur perfectionné à effet turbine selon l'une quelconque des revendications 1 à 3, **caractérisé en ce qu'**il présente 14 pales aérodynamiques (25), réparties circulairement et selon un pas angulaire constant sur la périphérie dudit enjoliveur (20).

5. Enjoliveur perfectionné à effet turbine selon l'une quelconque des revendications 1 à 4, **caractérisé en ce que** lesdites pales aérodynamiques (25) sont des pales à section à profil en « aile d'avion ».

6. Enjoliveur perfectionné à effet turbine selon la revendication 5, **caractérisé en ce que** le profil en « aile d'avion » de la section des pales aérodynamiques (25) est un profil choisi parmi les types de profil « en aile d'avion » suivants, connus en soi : profil de type « CLARK Y », profil de type « JOUKOWSKI », profil de type « NACA » symétrique ou cambré.

7. Enjoliveur perfectionné à effet turbine selon l'une quelconque des revendications 1 à 6, **caractérisé en ce qu'**il est réalisé en un matériau polymère, de type polyamide par exemple.

8. Enjoliveur perfectionné à effet turbine selon l'une quelconque des revendications 1 à 7, **caractérisé en ce que** sa partie centrale (21) est circulaire, pleine, et d'un diamètre (« d ») relativement important par rapport au diamètre (« D ») de l'enjoliveur (20), à savoir d'un diamètre (« d ») de l'ordre des deux tiers du diamètre (« D ») de l'enjoliveur (20) et **en ce que** la surface totale projetée des espaces (25i) entre les pales aérodynamiques (25) est sensiblement égale à la surface totale des ajourages (15) du voile (13) de la roue (10).

9. Enjoliveur perfectionné à effet turbine selon l'une quelconque des revendications 1 à 8, **caractérisé en ce que** la surface extérieure (21A) de sa partie centrale (21) est plane et alignée sur la face extérieure (29A) du crochet de jante (29).

10. Enjoliveur perfectionné à effet turbine selon l'une quelconque des revendications 1 à 9, **caractérisé en ce que** le nombre des ajourages (15) du voile (13) de la roue (10) est égal au nombre des espaces (25i) entre les pales aérodynamiques (25).

11. Enjoliveur perfectionné à effet turbine selon l'une quelconque des revendications 1 à 10, **caractérisé en ce que** chaque déflecteur (27, 28) est raccordé à la partie centrale (21) de l'enjoliveur (20) par une section de raccordement (R27, R28) en arc de cercle.

12. Enjoliveur turbine perfectionné selon la revendication 11, **caractérisé en ce que** lesdites sections de raccordement (R27, R28) en arc de cercle présentent un rayon compris entre 10 et 50 millimètres.

13. Enjoliveur perfectionné à effet turbine selon l'une quelconque des revendications 1 à 12, l'enjoliveur (20) présentant également des ajourages radiaux (6b) formés par les pales d'enjoliveur (25), **caractérisé en ce que** les deux déflecteurs (27, 28) présentent chacun en section transversale une forme de cercle au contour ondulé, de sorte que des parties de parois (70, 80) des deux déflecteurs respectivement extérieur (28) et intérieur (27) délimitant entre elles chaque ajourage radial (6b) sont élargies radialement en direction d'une pale d'enjoliveur (25) adjacente.

14. Enjoliveur perfectionné à effet turbine selon l'une quelconque des revendications 1 à 13, **caractérisé en ce que** les parties de parois des deux déflecteurs extérieur (28) et intérieur (27) sont radialement convexes extérieurement.

15. Enjoliveur perfectionné à effet turbine selon l'une quelconque des revendications 1 à 14, **caractérisé en ce que** la section longitudinale de chaque déflecteur (28, 27) est sensiblement rectiligne, et orientée selon une droite formant avec un plan orienté selon la direction longitudinale d'une pale d'enjoliveur (25) un angle supérieur ou égal à 90°.

## Patentansprüche

1. Verbesserte Radkappe mit Turbinenwirkung für ein Fahrzeugrad, insbesondere für ein Kraftfahrzeuggrad, wobei das Rad (10) eine zylindrische umfängliche Felge (12), eine zentrale Nabe (11) und eine Schüssel (13) mit Aussparungen (15) umfasst, die die zentrale Nabe (11) mit der umfänglichen Felge (12) verbinden, und wobei die verbesserte Radkappe (20) einen zentralen Teil (21) und aerodynamische Schaufeln (25) aufweist, die außerhalb des zentralen Teils (21) verteilt sind und den Aussparungen (15) der Schüssel (13) des Rads (10) gegenüberliegen, um einen Luftfluss zu schaffen, der es erlaubt, den seitlichen Nachstrom des Fahrzeugs zu verbessern, wobei die verbesserte Radkappe (20) zwei kreisförmige Ablenkelemente (27, 28) in Ausdehnung von der inneren Oberfläche der Radkappe (20) umfasst, die dazu bestimmt sind, den Luftfluss zu den Aussparungen (15) der Schüssel (13) des Rads (10) auszurichten, nämlich ein erstes Ablenkelement, "inneres Ablenkelement" (27) genannt, das zu dem Rand (15C) der Aussparungen (15), der der Mitte ("XX'") des Rads (10) am nächsten liegt, und ein zweites Ablenkelement, "äußeres Ablenkelement" (28), genannt, das zu dem Rand (15P) der Aussparungen (15), die dem Außenumfang des Rads (10) am nächsten liegen, gerichtet ist, verbesserte Radkappe (20) **dadurch gekennzeichnet, dass** an dem Ende jedes der zwei Ablenkelemente (27, 28) zwischen der Radkappe (20) und der Schüssel (13) des Rads (10) eine kreisförmige biegsame Dichtung (37, 38) vorgesehen ist, die es erlaubt, eine Abdichtung zwischen der Radkappe (20) und der Schüssel (13) des Rads, und folglich einen optimalen Luftfluss auf den Aussparungen (15) der Schüssel (13) des Rads (10) zu garantieren.

2. Verbesserte Radkappe mit Turbinenwirkung nach Anspruch 1, **dadurch gekennzeichnet, dass** die Ablenkelemente von der Schüssel des Rads um ein Spiel ("h") mit relativ geringem Mindestwert in der Größenordnung von 0,005 Mal dem Durchmesser des Rads, das heißt in der Größenordnung von 2 Millimeter für ein Rad zu 16 Zoll (406,40 mm) beabstandet sind.

3. Verbesserte Radkappe mit Turbinenwirkung nach einem der Ansprüche 1 und 2, **dadurch gekennzeichnet, dass** die Ablenkelemente von der Schüssel des Rads um ein Spiel ("h") mit Maximalwert in der Größenordnung von 0,0075 Mal dem Durchmesser des Rads, das heißt in der Größenordnung von 3 Millimeter für ein Rad zu 16 Zoll (406,40 mm) beabstandet sind.

4. Verbesserte Radkappe mit Turbinenwirkung nach einem der Ansprüche 1 bis 3, **dadurch gekennzeichnet, dass** sie 14 aerodynamische Schaufeln (25) aufweist, die kreisförmig und gemäß einem konstanten Winkelabstand auf dem Umfang der Radkappe (20) verteilt sind.

5. Verbesserte Radkappe mit Turbinenwirkung nach einem der Ansprüche 1 bis 4, **dadurch gekennzeichnet, dass** die aerodynamischen Schaufeln (25) Schaufeln mit Querschnitt mit "Flugzeugflügelprofil" sind.

6. Verbesserte Radkappe mit Turbinenwirkung nach Anspruch 5, **dadurch gekennzeichnet, dass** das "Flugzeugflügelprofil" des Querschnitts der aerodynamischen Schaufeln (25) ein Profil ist, das aus folgenden "Flugzeugflügel"-Profiltypen, die als solche bekannt sind, ausgewählt ist: Profil vom Typ "CLARK Y", Profil vom Typ "JOUKOWSKI", Profil vom Typ "NACA", das symmetrisch oder gewölbt ist.

7. Verbesserte Radkappe mit Turbinenwirkung nach einem der Ansprüche 1 bis 6, **dadurch gekennzeichnet, dass** sie aus einem Polymermaterial, zum Beispiel vom Typ Polyamid, hergestellt ist.

8. Verbesserte Radkappe mit Turbinenwirkung nach einem der Ansprüche 1 bis 7, **dadurch gekennzeichnet, dass** ihr zentraler Teil (21) kreisförmig, massiv ist und einen Durchmesser ("d") aufweist, der in Bezug auf den Durchmesser ("D") der Radkappe (20) relativ groß ist, nämlich einen Durchmesser ("d") in der Größenordnung der zwei Drittel des Durchmessers ("D") der Radkappe (20), und dass die gesamte projizierte Oberfläche der Räume (25i) zwischen den aerodynamischen Schaufeln (25) im Wesentlichen gleich der gesamten Oberfläche der Aussparungen (15) der Schüssel (13) des Rads (10) ist.

9. Verbesserte Radkappe mit Turbinenwirkung nach einem der Ansprüche 1 bis 8, **dadurch gekennzeichnet, dass** die Außenoberfläche (21A) ihres zentralen Teils (21) flach und auf der Außenoberfläche (29A) der Nutpartie (29) ausgerichtet ist.

10. Verbesserte Radkappe mit Turbinenwirkung nach einem der Ansprüche 1 bis 9, **dadurch gekennzeichnet, dass** die Anzahl der Aussparungen (15) der Schüssel (13) des Rads (10) gleich der Anzahl der Räume (25i) zwischen den aerodynamischen Schaufeln (25) ist.

11. Verbesserte Radkappe mit Turbinenwirkung nach einem der Ansprüche 1 bis 10, **dadurch gekennzeichnet, dass** jedes Ablenkelement (27, 28) an den zentralen Teil (21) der Radkappe (20) durch einen Anschlussabschnitt (R27, R28) im Kreisbogen angeschlossen ist.

12. Verbesserte Turbinenradkappe nach Anspruch 11, **dadurch gekennzeichnet, dass** die Anschlussabschnitte (R27, R28) im Kreisbogen einen Radius zwischen 10 und 50 Millimeter aufweisen.

13. Verbesserte Radkappe nach einem der Ansprüche 1 bis 12, wobei die Radkappe (20) auch radiale Aussparungen (6b) aufweist, die durch die Radkappenschaufeln (25) gebildet sind, **dadurch gekennzeichnet, dass** die zwei Ablenkelemente (27, 28) jeweils im Querschnitt eine Kreisform mit wellenförmiger Kontur derart aufweisen, dass die Wandteile (70, 80) der zwei Ablenkelemente, jeweils das äußere (28) und das innere (27), die zwischeneinander jede radiale Aussparung (6b) abgrenzen, radial in Richtung einer benachbarten Radkappenschaufel (25) verbreitert sind.

14. Verbesserte Radkappe mit Turbinenwirkung nach einem der Ansprüche 1 bis 13, **dadurch gekennzeichnet, dass** die Wandteile der zwei Ablenkelemente, jeweils des äußeren (28) und des inneren (27), außen radial konvex sind.

15. Verbesserte Radkappe mit Turbinenwirkung nach einem der Ansprüche 1 bis 14, **dadurch gekennzeichnet, dass** der Längsquerschnitt jedes Ablenkelements (28, 27) im Wesentlichen geradlinig und entlang einer Geraden ausgerichtet ist, die mit einer Ebene, die entlang der Längsrichtung einer Radkappe Schaufel (25) ausgerichtet ist, einen Winkel größer oder gleich 90° bildet.

## Claims

1. An improved hubcap with turbine effect for a vehicle wheel, in particular for a motor vehicle wheel, said wheel (10) having a cylindrical, peripheral rim (12), a central hub (11) and a disc (13) with perforations (15) connecting the central hub (11) to the peripheral rim (12), and said improved hubcap (20) having a central portion (21) and aerodynamic blades (25), which are distributed on the exterior of said central portion (21) and which are distributed on the exterior of said central portion (21) and which are situated facing the perforations (15) of the disc (13) of the wheel (10) so as to create a flow of air permitting the lateral wake of the vehicle to be improved, said improved hubcap (20) comprising two circular deflectors (27, 28), extending from the internal surface of the hubcap (20), intended to direct the flow of air towards the perforations (15) of the disc (13) of the wheel (10), namely a first deflector, designated "interior deflector" (27), directed towards the edge (15C) of the perforations (15) closest to the centre ("XX'") of the wheel (10), and a second deflector, designated "exterior deflector" (28), directed towards the edge (15P) of the perforations (15) closest to the exterior periphery of the wheel (10), said improved hubcap (20) being **characterized in that** there is provided, at the end of each of the two deflectors (27, 28), between the hubcap (20) and the disc (13) of the wheel (10), a flexible, circular seal (37, 38), which permits a tightness to be guaranteed between the hubcap (20) and the disc (13) of the wheel and, consequently, an optimum flow of air on the perforations (15) of the disc (13) of the wheel (10).

2. The improved hubcap with turbine effect according to Claim 1, **characterized in that** said deflectors are remote from the disc of the wheel by a clearance ("h") of relatively small minimum value in the order of 0.005 times the diameter of the wheel, i.e. in the order of 2 millimetres for a wheel of 16 inches (406.40 mm).

3. The improved hubcap with turbine effect according to any one of Claims 1 and 2, **characterized in that** said deflectors are remote from the disc of the wheel by a clearance ("h") of maximum value in the order of 0.0075 times the diameter of the wheel, i.e. in the order of 3 millimetres for a wheel of 16 inches (406.40 mm).

4. The improved hubcap with turbine effect according to any one of Claims 1 to 3, **characterized in that** it has 14 aerodynamic blades (25), distributed in a circular manner and according to a constant angular pitch on the periphery of said hubcap (20).

5. The improved hubcap with turbine effect according to any one of Claims 1 to 4, **characterized in that** said aerodynamic blades (25) are blades with a section having an "aircraft wing" profile.

6. The improved hubcap with turbine effect according to Claim 5, **characterized in that** the "aircraft wing" profile of the section of the aerodynamic blades (25) is a profile selected from the following "aircraft wing" types of profile, known per se: profile of the "CLARK Y" type, profile of the "JOUKOWSKI" type, profile of the "NACA" type, symmetrical or arched.

7. The improved hubcap with turbine effect according to any one of Claims 1 to 6, **characterized in that** it is made from a polymeric material, of the polyamide type for example.

8. The improved hubcap with turbine effect according to any one of Claims 1 to 7, **characterized in that** its central portion (21) is circular, solid, and with a relatively large diameter ("d") with respect to the diameter ("D") of the hubcap (20), namely with a diameter ("d") in the order of two thirds of the diameter ("D") of the hubcap (20) and **in that** the total projected area of the spaces (25i) between the aerodynamic blades (25) is substantially equal to the total area of the perforations (15) of the disc (13) of the wheel (10).

9. The improved hubcap with turbine effect according to any one of Claims 1 to 8, **characterized in that** the exterior surface (21A) of its central part (21) is flat and aligned on the exterior face (29A) of the rim hook (29).

10. The improved hubcap with turbine effect according to any one of Claims 1 to 9, **characterized in that** the number of perforations (15) of the disc (13) of the wheel (10) is equal to the number of spaces (25i) between the aerodynamic blades (25).

11. The improved hubcap with turbine effect according to any one of Claims 1 to 10, **characterized in that** each deflector (27, 28) is connected to the central portion (21) of the hubcap (20) by a connecting section (R27, R28) in the shape of a circular arc.

12. The improved turbine hubcap according to Claim 11, **characterized in that** said connecting sections (R27, R28) in the shape of a circular arc have a radius comprised between 10 and 50 millimetres.

13. The improved hubcap with turbine effect according to any one of Claims 1 to 12, the hubcap (20) also having radial perforations (6b) formed by the hubcap blades (25), **characterized in that** the two deflectors (27, 28) each have in transverse section a shape of a circle with undulating contour, such that wall portions (70, 80) of the two respectively exterior (28) and interior (27) deflectors delimiting between them each radial perforation (6b) are enlarged radially in the direction of an adjacent hubcap blade (25).

14. The improved hubcap with turbine effect according to any one of Claims 1 to 13, **characterized in that** the wall portions of the two exterior (28) and interior (27) deflectors are radially convex externally.

15. The improved hubcap with turbine effect according to any one of Claims 1 to 14, **characterized in that** the longitudinal section of each deflector (28, 27) is substantially rectilinear, and oriented along a straight line forming with a plane oriented along the longitudinal direction of a hubcap blade (25), an angle greater than or equal to 90°.
